# EUROPÄISCHE PATENTANMELDUNG

(11) **EP 4 660 066 A1**
(43) Veröffentlichungstag der Anmeldung: **10.12.2025**
(21) Anmeldenummer: 25180172.6
(22) Anmeldetag: 02.06.2025
(51) Int. Cl.: B62M 6/55, B62M 11/02

(54) **ANTRIEBSANORDNUNG EINES ELEKTROFAHRRADS**

(30) Priorität: 07.06.2024 DE 102024205289
(71) Anmelder: Robert Bosch GmbH, 70442 Stuttgart (DE)
(72) Erfinder: Zimmermann, Christoph, 72147 Nehren (DE); Braun, Sigmund, 72127 Kusterdingen (DE)

(57) **Zusammenfassung**

Die vorliegende Erfindung betrifft eine Antriebsanordnung eines Elektrofahrrads, umfassend ein Abtriebselement, welches insbesondere eingerichtet ist zur Übertragung eines Motormoments, eine Ausgangswelle, einen ersten Freilauf, und einen zweiten Freilauf, wobei der erste Freilauf und der zweite Freilauf an der Ausgangswelle angeordnet sind, und wobei der erste Freilauf und der zweite Freilauf koaxial und in axialer Richtung zumindest teilweise überlappend angeordnet sind.

## Beschreibung

### Stand der Technik

Die vorliegende Erfindung betrifft eine Antriebsanordnung eines Elektrofahrrads, sowie ein Elektrofahrrad.

In Elektrofahrrädern sind Freiläufe bekannt, welche dazu eingerichtet sind, eine Verbindung zwischen einem angetriebenen Abtriebselement und beispielsweise einem Motorgetriebe, welches mit dem Antriebsmotor verbunden ist, zu unterbrechen, wenn das angetriebene Abtriebselement bezüglich der vorwärts gerichteten Drehrichtung schneller läuft als ein Ausgang des Motorgetriebes, das heißt in derjenigen Drehrichtung, welche einen Antrieb des Fahrzeugs in vorwärts gerichteter Fahrtrichtung verursacht. Zudem sind Freiläufe bekannt, welche zwischen einer Kurbelwelle, die durch ein Tretmoment des Fahrers betätigt werden kann, und einem Kettenblatt angeordnet sind, um die Kurbeln bzw. den Fahrer vom Antriebsstrang in Freilaufrichtung trennen zu können. Häufig sind derartige Freiläufe im Bereich von Tretlagern des Elektrofahrrads angeordnet.

### Offenbarung der Erfindung

Die erfindungsgemäße Antriebsanordnung mit den Merkmalen des Anspruchs 1 zeichnet sich demgegenüber durch eine vorteilhafte kompakte Konstruktion aus, die bei einer einfachen Herstellbarkeit mit wenigen Bauteilen einen besonders geringen Bauraum beansprucht. Dies wird erfindungsgemäß erreicht durch eine Antriebsanordnung eines Elektrofahrrads, umfassend ein Abtriebselement, eine Ausgangswelle, einen ersten Freilauf, und einen zweiten Freilauf. Insbesondere ist das Abtriebselement eingerichtet zur Übertragung eines Motormoments. Das heißt, vorzugsweise kann das Abtriebselement durch ein Motormoment angetrieben werden, und insbesondere dieses Motormoment weiter übertragen. Der erste Freilauf und der zweite Freilauf sind an der Ausgangswelle angeordnet. Dabei sind der erste Freilauf und der zweite Freilauf koaxial zueinander angeordnet. Zudem sind der erste Freilauf und der zweite Freilauf in axialer Richtung zumindest teilweise überlappend angeordnet.

Insbesondere ist das Abtriebselement von dem Motormoment antreibbar ausgebildet, beispielsweise indirekt über ein Getriebe.

Bevorzugt kann die Ausgangswelle mit einem weiteren Antriebsstrang des Fahrzeugs, beispielsweise über ein Kettenplatt und vorzugsweise eine Kette oder ein alternatives Übertragungselement, verbindbar ausgebildet sein. Das heißt, vorzugsweise kann die Ausgangswelle von dem Gesamt-Moment des Systems, das heißt der Summe aus Tretmoment und Motormoment, antreibbar angeordnet und ausgebildet sein.

Besonders bevorzugt kann das Abtriebselement ein Zahnrad eines Getriebes der Antriebsanordnung sein, wie beispielsweise das letzte Zahnrad eines Getriebes der Antriebsanordnung.

Als Freilauf wird insbesondere ein Element angesehen, welches in einer Sperrkonfiguration eine Drehmomentübertragung zwischen zwei Komponenten der Antriebsanordnung erlaubt, und in einer Freilaufkonfiguration die Drehmomentübertragung zwischen den beiden Komponenten verhindert, und damit insbesondere eine freie relative Rotation der beiden Komponenten erlaubt.

Als teilweise überlappend wird insbesondere angesehen, dass zumindest Teilbereiche von jedem der beiden Freiläufe in einer gemeinsamen Schnittebene liegen, die orthogonal zur gemeinsamen Achse der beiden Freiläufe ist.

Bevorzugt überlappen sich die beiden Freiläufe in axialer Richtung um zumindest 50 % der axialen Länge von einem der beiden Freiläufe. Weiter bevorzugt kann einer der beiden Freiläufe von dem anderen Freilauf in axialer Richtung vollständig überlappt werden.

Mit anderen Worten wird eine Antriebsanordnung eines Elektrofahrrads bereitgestellt, welche zwei Freiläufe aufweist, die sich axial zumindest teilweise überlappen, insbesondere in einer axialen Schnittebene. Dabei sind die beiden Freiläufe koaxial zueinander angeordnet. Das heißt, die Komponenten, dessen relative Rotation die Freiläufe zueinander sperren und freigeben, können, zumindest in der entsprechenden Freilaufkonfiguration, um die gemeinsame Achse rotieren.

Die Antriebsanordnung bietet dabei den Vorteil, dass eine besonders einfache und kostengünstige Konstruktion bereitgestellt werden kann, welche besonders kompakte Abmessungen der Antriebsanordnung erlaubt. Insbesondere kann dabei eine in axialer Richtung besonders kompakte Geometrie der Antriebsanordnung bereitgestellt werden. Dadurch kann ermöglicht werden, dass mit der Antriebsanordnung verbindbare Kurbeln des Elektrofahrrads entlang der Axialrichtung besonders nahe beieinander angeordnet werden können. Insbesondere kann dadurch ein niedriger sogenannter Q-Faktor bereitgestellt werden. Dies erlaubt besonders komfortable und ergonomisch vorteilhafte Geometrien des Elektrofahrrads im Bereich der Tretlager.

Die Unteransprüche zeigen bevorzugte Weiterbildungen der Erfindung.

Bevorzugt ist der zweite Freilauf ein Klemmrollenfreilauf. Das heißt, der zweite Freilauf weist insbesondere mehrere Klemmrollen auf. Dadurch kann bei einfacher und kostengünstiger Herstellung eine zuverlässige Freilauf- und Sperrfunktion bereitgestellt werden.

Besonders bevorzugt ist der erste Freilauf ein bidirektionaler Freilauf. Das heißt, der erste Freilauf kann jeweils bezüglich beiden Drehrichtungen sperren und freigeben. Vorzugsweise kann dies mittels einer aktiv steuerbaren Betätigung oder alternativ über Reibkräfte erfolgen. Dadurch kann ein besonders flexibler Betrieb der Antriebsanordnung bereitgestellt werden.

Vorzugsweise ist der erste Freilauf derart ausgebildet, um, insbesondere in Freilaufrichtung, zusätzlich eine Lagerung bereitzustellen. Das heißt, zusätzlich zum Sperren und Freigeben der Drehmomentübertragung kann der erste Freilauf, insbesondere zumindest bei Rotation in der Freilaufrichtung, eine Lagerungsfunktion bereitstellen. Dadurch kann eine besonders einfache und kostengünstige und kompakte Konstruktion der Antriebsanordnung bereitgestellt werden, da mehrere Funktionen in den ersten Freilauf besonders vorteilhaft integriert werden können.

Weiter bevorzugt ist der erste Freilauf zwischen dem Abtrieselement und der Ausgangswelle angeordnet und als Motorfreilauf ausgebildet. Insbesondere erlaubt der erste Freilauf damit in Sperrrichtung eine Drehmomentübertragung vom Abtriebselement in Richtung der Ausgangswelle. Das heißt, im gesperrten Zustand wird über den ersten Freilauf ein Drehmoment, beispielsweise ein Motormoment von einem Motor, welches an dem Abtriebselement bereitgestellt werden kann, vom Abtriebselement in Richtung der Ausgangswelle übertragen. Bevorzugt wird die Drehmomentübertragung in einer Freilaufrichtung, die entgegengesetzt zur Sperrrichtung ist, vom ersten Freilauf verhindert, das heißt in diesem Fall öffnet der Freilauf. Dadurch kann auf einfache und zuverlässige Weise ermöglicht werden, dass ein Motormoment an der Ausgangswelle bereitgestellt werden kann, wobei verhindert werden kann, dass ein Drehmoment in Richtung des Motors übertragen wird.

Bevorzugt umfasst die Antriebsanordnung ferner eine Kurbelwelle, wobei der zweite Freilauf zwischen der Kurbelwelle und der Ausgangswelle angeordnet ist. Dabei ist der zweite Freilauf als Fahrerfreilauf ausgebildet. Insbesondere erlaubt der zweite Freilauf dabei in Sperrrichtung eine Drehmomentübertragung von der Kurbelwelle in Richtung der Ausgangswelle. Das heißt, im gesperrten Zustand bewirkt der zweite Freilauf eine Drehmomentübertragung, beispielsweise des Tretmoments, das von einem Fahrer des Elektrofahrrads aufgebracht werden kann, von der Kurbelwelle an die Ausgangswelle. Insbesondere kann der zweite Freilauf in Freilaufrichtung und/oder im geöffneten Zustand die Drehmomentübertragung zwischen Kurbelwelle und Ausgangswelle verhindern. Damit kann auf einfache und zuverlässige Weise eine Entkopplung des Fahrers von dem Antriebsstrang im Freilaufzustand ermöglicht werden, wobei in Sperrrichtung der Fahrer stets ein Tretmoment zum Vortrieb des Elektrofahrrads aufbringen kann.

Vorzugsweise umfasst die Antriebsanordnung ferner einen Freilaufträger, welcher mit der Kurbelwelle drehfest verbunden ist. Beispielsweise kann der Freilaufträger mittels einer formschlüssigen und/oder stoffschlüssigen und/oder kraftschlüssigen Verbindung mit der Kurbelwelle drehfest verbunden sein. Alternativ bevorzugt können Freilaufträger und Kurbelwelle gemeinsam als ein einstückiges Bauteil ausgebildet sein. Der Freilaufträger kann insbesondere einen Freilauf oder beide Freiläufe halten. Mit anderen Worten ist der Freilaufträger als Teil von zumindest einem der beiden Freiläufe ausgebildet, und beispielsweise einen entsprechenden Innenring und/oder Außenring bilden. Damit kann eine besonders einfache, kostengünstige und kompakte Konstruktion der Antriebsanordnung bereitgestellt werden.

Vorzugsweise ist der zweite Freilauf, insbesondere unmittelbar, bevorzugt in radialer Richtung, zwischen dem Freilaufträger und der Ausgangswelle, angeordnet. Damit kann eine besonders einfache und kostengünstige Konstruktion mit wenigen Bauteilen, welche in axialer Richtung besonders kompakt ist, bereitgestellt werden.

Bevorzugt sind der Freilaufträger und die Ausgangswelle mittels eines Lagers relativ zueinander drehbar gelagert. Insbesondere ist das Lager dabei ein Nadellager. Vorzugsweise befindet sich das Nadellager radial unmittelbar zwischen einem Teilbereich des Freilaufträgers und einem Teilbereich der Ausgangswelle. Dadurch kann eine besonders kompakte Konstruktion der Antriebsanordnung ermöglicht werden. Insbesondere steht dadurch mehr Bauraum für Freilaufträger und Ausgangswelle zur Verfügung, wodurch eine optimal an die jeweiligen mechanischen Anforderungen angepasste Konstruktion ermöglicht werden kann.

Weiter bevorzugt umfasst die Antriebsanordnung ein weiteres Nadellager zwischen der Ausgangswelle und der Kurbelwelle, für eine besonders kompakte Konstruktion.

Vorzugsweise umfasst die Antriebsanordnung ferner ein Axiallagerelement, welches insbesondere als Axiallagerlagerscheibe, auch Anlaufscheibe genannt, ausgebildet ist. Das Axiallagerelement ist in axialer Richtung zwischen dem Freilaufträger und der Ausgangswelle angeordnet. Vorzugsweise ist zusätzlich ein weiteres Axiallagerelement in axialer Richtung zwischen dem Freilaufträger und der Ausgangswelle angeordnet. Dadurch kann auf einfache und kostengünstige Weise eine axiale Abstützung von Kräften bereitgestellt werden, wodurch eine besonders robuste und langlebige Konstruktion ermöglicht werden kann.

Besonders bevorzugt ist der Freilaufträger mittels einer Steckverzahnung, auch Passverzahnung genannt, mit der Kurbelwelle verbunden. Insbesondere ist die Steckverzahnung derart ausgebildet, dass ein radiales Spiel zwischen Freilaufträger und Kurbelwelle vorliegt. Damit kann auf einfache und kostengünstige Weise die drehfeste Verbindung von Freilaufträger und Kurbelwelle ermöglicht werden, wobei ein gewisser Ausgleich von Toleranzen oder Dehnungen oder relativen Bewegungen in radialer Richtung möglich ist.

Weiter bevorzugt ist der erste Freilauf radial innerhalb des zweiten Freilaufs angeordnet. Mit anderen Worten ist der zweite Freilauf auf einem größeren Durchmesser als der erste Freilauf angeordnet. Beispielsweise kann dadurch eine einfache und kostengünstige Konstruktion bereitgestellt werden, bei der der zweite Freilauf radial unmittelbar zwischen dem Freilaufträger und dem Abtriebselement, welches beispielsweise als Zahnrad mit einer Verzahnung an der radial äußeren Seite ausgebildet sein kann, ermöglicht werden. Ein Teil der Ausgangswelle kann dabei beispielsweise vorteilhaft zwischen den beiden Freiläufen angeordnet sein.

Alternativ bevorzugt ist der zweite Freilauf radial innerhalb des ersten Freilaufs angeordnet. Mit anderen Worten ist der erste Freilauf auf einem größeren Durchmesser als der zweite Freilauf angeordnet. Dadurch kann aufgrund des größeren Durchmessers des ersten Freilaufs über diesen ein größeres maximales Drehmoment übertragen werden. Insbesondere wenn der erste Freilauf als Fahrerfreilauf ausgebildet ist, kann somit ein hohes Tretmoment über diesen zuverlässig und robust übertragen werden.

Besonders bevorzugt umfasst die Antriebsanordnung ferner ein Lager, welches mit dem ersten Freilauf und dem zweiten Freilauf jeweils koaxial und in axialer Richtung zumindest teilweise überlappend ausgebildet ist. Bevorzugt überlappt das Lager axial mit zumindest einem der beiden Freiläufe vollständig. Insbesondere kann das Lager als ein Kugellager ausgebildet sein. Bevorzugt ist das Lager zwischen Freilaufträger und Ausgangswelle angeordnet, um eine relative Lagerung dieser beiden Elemente bereitzustellen. Durch zusätzliche Integration des Lagers in axial überlappender Weise mit den Freiläufen kann eine besonders kompakte Geometrie der Antriebsanordnung in axialer Richtung ermöglicht werden.

Bevorzugt umfasst die Antriebsanordnung ferner einen Motor und ein Getriebe. Insbesondere ist der Motor ein Elektromotor, und insbesondere eingerichtet zur Bereitstellung eines Motormoments in Abhängigkeit eines Tretmoments des Fahrers des Elektrofahrrads. Das Getriebe ist dabei zwischen dem Motor und den beiden Freiläufen angeordnet. Insbesondere ist das Abtriebselement ein Teil des Getriebes. Beispielsweise kann das Abtriebselement das letzte Zahnrad des Getriebes sein. Vorzugsweise kann das Getriebe als mehrstufiges Stirnradgetriebe ausgebildet sein.

Vorzugsweise weist der Motor eine Motorwelle auf, an der das Motormoment bereitstellbar ist. Die Motorwelle ist dabei koaxial zur Ausgangswelle angeordnet. Insbesondere ist der gesamte Motor koaxial zur Ausgangswelle angeordnet. Mit anderen Worten wird somit ein Koaxialantrieb bereitgestellt. Das Getriebe kann beispielsweise eine Zwischenwelle umfassen, wobei das Motormoment von der Motorwelle über eine Verzahnung an die Zwischenwelle, und von der Zwischenwelle über eine weitere Verzahnung an die Ausgangswelle übertragen werden kann. Damit kann eine besonders kompakte und kostengünstige Antriebsanordnung bereitgestellt werden, wobei durch die axial überlappenden Freiläufe der axiale Bauraum neben dem Motor besonders klein gehalten werden kann, um eine besonders geringe axiale Gesamtgröße der Antriebsanordnung ermöglichen zu können.

Weiter bevorzugt weist der Motor eine Motorwelle auf, an der das Motormoment bereitstellbar ist, wobei die Motorwelle parallel zur Ausgangswelle und in einem vorbestimmten Abstand zur Ausgangswelle angeordnet ist. Mit anderen Worten wird somit ein Parallelantrieb bereitgestellt. Insbesondere ist der Motor dabei in radialer Richtung neben der Ausgangswelle angeordnet. Damit kann eine alternative Konstruktion und Geometrie der Antriebsanordnung bereitgestellt werden, welche einfach und kostengünstig herstellbar ist und in axialer Richtung besonders kompakte Abmessungen aufweist.

Weiterhin führt die Erfindung zu einem Elektrofahrrad, umfassend die beschriebene Antriebsanordnung.

### Kurze Beschreibung der Zeichnungen

Nachfolgend werden Ausführungsbeispiele der Erfindung unter Bezugnahme auf die begleitenden Zeichnungen im Detail beschrieben. In der Zeichnung ist:
- Figur 1: eine vereinfachte schematische Ansicht eines Elektrofahrrads mit einer Antriebsanordnung gemäß einem ersten Ausführungsbeispiel der Erfindung,
- Figur 2: eine Detail-Schnittansicht der Antriebsanordnung des ersten Ausführungsbeispiels,
- Figur 3: eine Detail-Seitenansicht der Antriebsanordnung des ersten Ausführungsbeispiels,
- Figur 4: eine Detail-Schnittansicht einer Antriebsanordnung gemäß einem zweiten Ausführungsbeispiel der Erfindung, und
- Figur 5: eine Detail-Schnittansicht einer Antriebsanordnung gemäß einem dritten Ausführungsbeispiel der Erfindung,
- Figur 6: eine Detail-Schnittansicht einer Antriebsanordnung gemäß einem vierten Ausführungsbeispiel der Erfindung,
- Figur 7: eine perspektivische Ansicht eines Details der Antriebsanordnung der Figur 6, und
- Figur 8: eine perspektivische Ansicht eines Details einer Antriebsanordnung gemäß einem fünften Ausführungsbeispiel der Erfindung.

### Ausführungsformen der Erfindung

Bevorzugt sind alle gleichen Bauteile, Elemente und/oder Einheiten in allen Figuren mit den gleichen Bezugszeichen versehen.

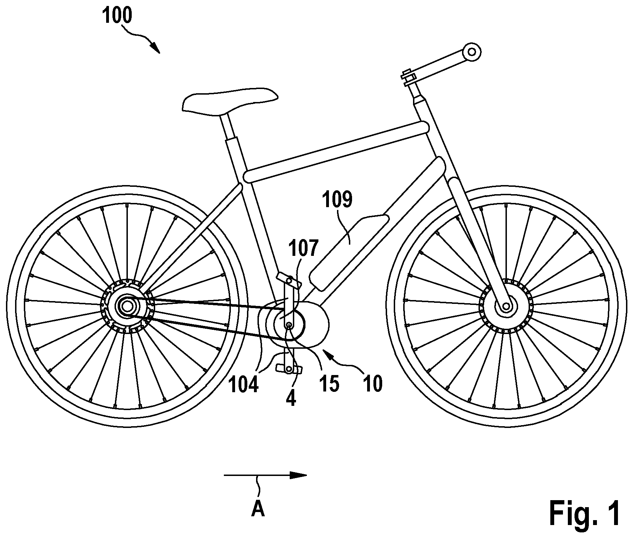

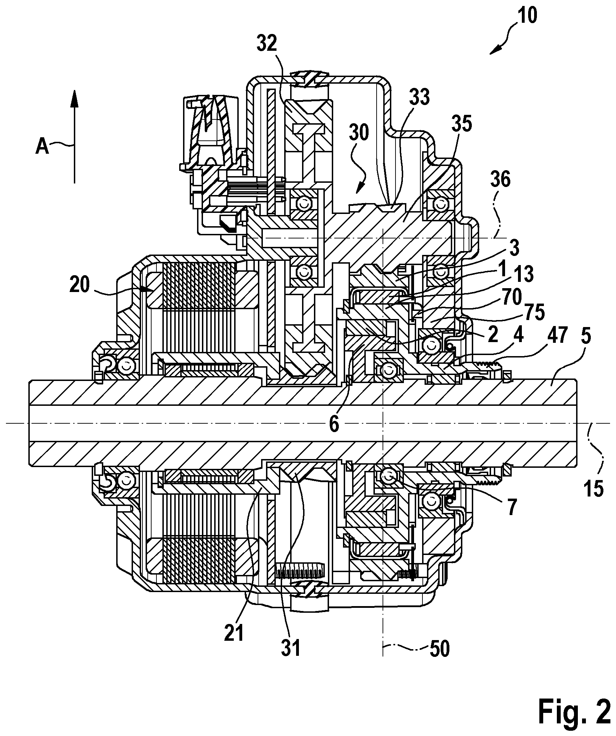

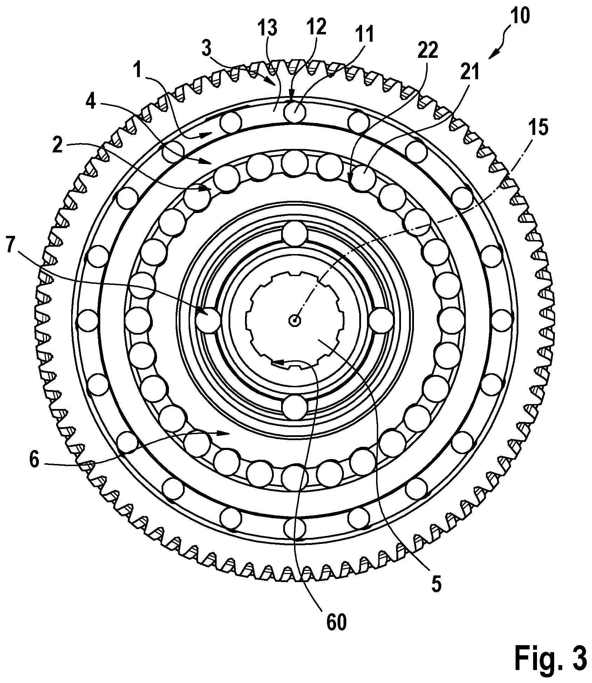

Figur 1 zeigt eine vereinfachte schematische Ansicht eines Elektrofahrrads 100 mit einer Antriebsanordnung 10 gemäß einem ersten Ausführungsbeispiel der Erfindung. Details der Antriebsanordnung 10 des ersten Ausführungsbeispiels sind in den Figuren 2 und 3 dargestellt.

Die Antriebsanordnung 10 umfasst einen Motor 20, der insbesondere ein Elektromotor ist. Der Motor 20 kann mittels eines elektrischen Energiespeichers 109 des Elektrofahrrads 100 mit elektrischer Energie versorgt werden.

Die Antriebsanordnung 10 ist im Bereich eines Tretlagers des Elektrofahrrads 100 angeordnet. Durch ein mittels des Motors 20 erzeugten Motordrehmoments kann eine durch Muskelkraft erzeugte Tretkraft eines Fahrers des Elektrofahrrads 100 motorisch unterstützt werden.

Die Antriebsanordnung 10 umfasst neben dem Motor 20 ein Getriebe 30, eine Kurbelwelle 5, und eine Ausgangswelle 4 (vgl. insbesondere Figur 2).

Die Kurbelwelle 5 erstreckt sich entlang einer Kurbelachse 15. Die Ausgangswelle 4 ist koaxial zur Kurbelwelle 5 angeordnet. Im Detail erstreckt sich die Kurbelwelle 5 durch die Ausgangwelle 4 hindurch, wobei Kurbelwelle 5 und Ausgangswelle 4 relativ zueinander drehbar gelagert sind, unter anderem mittels eines Lagers 7.

Die Ausgangswelle 4 weist eine Ausgangsschnittstelle 47 auf. Mit der Ausgangsschnittstelle 47 ist ein Ausgangselement 107, welches insbesondere als Kettenblatt ausgebildet ist (vgl. Figur 1), verbindbar. Das Ausgangselement 107 kann über ein Übertragungselement, wie insbesondere eine Fahrradkette, das Drehmoment an ein Hinterrad des Elektrofahrrads 100 übertragen.

Die Kurbelwelle 5 kann insbesondere drehfest mit Kurbeln 104 (vgl. Figur 1) verbunden sein. Der Fahrer des Elektrofahrrads 100 kann über die Kurbeln 104 ein Tretmoment an der Kurbelwelle 5 erzeugen.

Bei der Antriebsanordnung 10 kann das vom Motor 20 erzeugte Motormoment und/oder das an der Kurbelwelle 5 vom Fahrer erzeugte Tretmoment an die Ausgangswelle 4 übertragen werden, um am Ausgangselement 47 ein Ausgangsmoment bereitzustellen.

Zur Übertragung des Motormoments umfasst die Antriebsanordnung 10 ein Getriebe 30. Der Motor 20 umfasst eine Motorwelle 21, welche drehfest mit einer Motorverzahnung 31 verbunden ist. Von der Motorverzahnung 31 wird das Motormoment an ein zweites Zahnrad 32 übertragen, welches drehfest mit einer Zwischenwelle 35 verbunden ist.

Die Zwischenwelle 35 ist um eine Zwischenwellenachse 36, welche parallel zur Kurbelachse 15 und in einem Abstand zur Kurbelachse 15 angeordnet ist, rotierbar.

Die Zwischenwelle 35 umfasst zudem ein drittes Zahnrad 33, welches drehfest mit der Zwischenwelle 35 verbunden ist. Vom dritten Zahnrad wird das Drehmoment weiter auf ein Abtriebselement 3 übertragen, welches als Zahnrad ausgebildet ist, das um die Kurbelachse 15 rotierbar ist.

Zwischen dem Abtriebselement 3 und der Ausgangswelle 4 ist ein erster Freilauf 1 angeordnet. Je nach Freilaufkonfiguration des ersten Freilaufs 1 kann dieser eine Drehmomentübertragung von dem Abtriebselement 3 auf die Ausgangswelle 4 erlauben, oder alternativ verhindern, das heißt eine relative freie Rotation erlauben.

Der erste Freilauf 1 ist dabei als ein bidirektionaler Freilauf ausgebildet. Das heißt, der erste Freilauf 1 kann in beide relativen Drehrichtungen von Abtriebselement 3 und Ausgangswelle 4 öffnen, das heißt eine freie Rotation ohne Drehmomentübertragung erlauben. Dies kann durch eine beispielsweise gezielte gesteuerte Betätigung eines Freilaufkäfigs 13 des ersten Freilaufs 1 erfolgen (vgl. Figur 3).

Der Freilaufkäfig 13 ist dabei vorgesehen, um in Umfangsrichtung vorgegebene Abstände von Klemmrollen 11 des ersten Freilaufs 1 sicherzustellen. Zudem kann der Freilaufkäfig 13, beispielsweise in bestimmten Betriebszuständen, gezielt eine Bewegung der Klemmrollen 11 derart bewirken, dass diese in eine Freilaufkonfiguration gebracht werden, in der der erste Freilauf 1 geöffnet ist.

Die Bewegung des Freilaufkäfigs 13 derart, um die gesteuerte Betätigung der Freilauffunktion, das heißt die Bidirektionalität, durch entsprechende Bewegung der Klemmrollen 11, bereitzustellen, kann mittels eines Reibelements 70 erfolgen, welches drehfest mit dem Freilaufkäfig 13 verbunden sind.

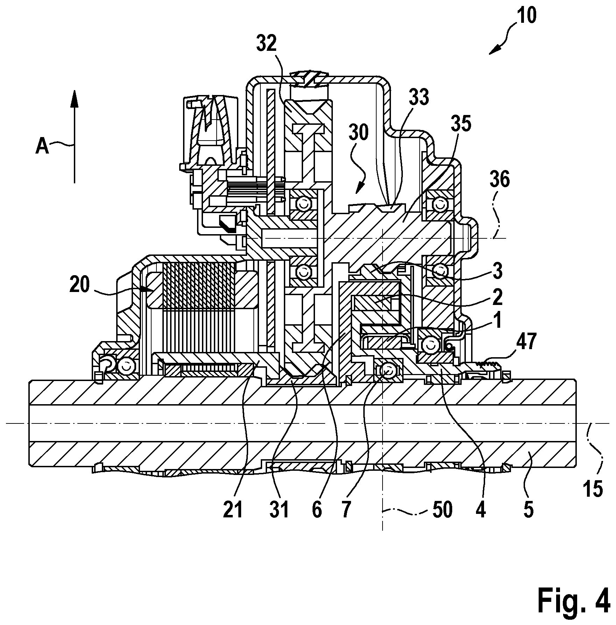

In Figur 4 ist dabei die Verbindung des Freilaufkäfigs 13 mit dem blechförmig ausgebildetem Reibelement 70 zu erkennen. Das Reibelement 70 kann sich dabei in radialer Richtung erstrecken.

Das Reibelement 70 ist als Reibring ausgebildet. Um den Umfang verteilt sind insbesondere an einem unbeweglichen Gehäuseteil 75 mehrere Federelemente angeordnet, welche jeweils mittels einer Federkraft in axialer Richtung gegen das Reibelement 70 drücken. Dadurch wird bei entsprechender relativer Rotation ein Reibmoment zwischen Gehäuseteil 75 und, über das Reibelement 70, dem Freilaufkäfig 13 erzeugt, wodurch der Freilaufkäfig 13 in Umfangsrichtung relativ rotiert wird, um die Klemmrollen 11 zu bewegen und damit den ersten Freilauf 1 zu sperren oder freizugeben.

Der erste Freilauf 1 ist dabei zudem derart ausgebildet, dass dieser in Freilaufrichtung, das heißt in geöffneten Zustand, eine Lagerungsfunktion bereitstellt. Das heißt, bei geöffnetem ersten Freilauf 1 erlaubt der erste Freilauf 1 eine freie relative Rotation von Abtriebselement 3 und Ausgangswelle 4 zueinander und bewirkt zudem eine Lagerung, vergleichbar eines Gleitlagers.

In Sperrrichtung, das heißt bei gesperrtem ersten Freilauf 1, kann ein Drehmoment von dem Abtriebselement 3 über den ersten Freilauf 1 an die Ausgangswelle 4 übertragen werden.

Zudem umfasst die Antriebsanordnung 10 einen Freilaufträger 6 und einen zweiten Freilauf 2. Der Freilaufträger 6 ist drehfest mit der Kurbelwelle 5 verbunden, beispielsweise mittels einer Keilwellenverbindung 60 (vgl. Figur 3).

Zwischen einer radial äußeren Seite des Freilaufträgers 6 und einem Teil der Ausgangswelle 4 befindet sich der zweite Freilauf 2. Der zweite Freilauf 2 ist dabei ein Klemmrollenfreilauf. Dabei bewirkt der zweite Freilauf 2 in Sperrrichtung automatisch eine Drehmomentübertragung von der Kurbelwelle 5 bzw. dem Freilaufträger 6 an die Ausgangswelle 4. Im geöffneten Zustand, das heißt in Freilaufrichtung, erlaubt der zweite Freilauf 2 automatisch eine freie relative Rotation von Ausgangswelle 4 und Kurbelwelle 3 zueinander.

Bei der Antriebsanordnung 10 sind der erste Freilauf 1 und der zweite Freilauf 2 koaxial zueinander und bezüglich der axialen Richtung der Kurbelachse 15 axial überlappend angeordnet. Zusätzlich ist das Lager 7, welches insbesondere eines der Tretlager der Antriebsanordnung 10 bildet, mit dem ersten Freilauf 1 und dem zweiten Freilauf 2 in axialer Richtung überlappend angeordnet. Im Detail ist eine zur Kurbelachse 15 orthogonale Schnittebene 50 definiert, welche den ersten Freilauf 1 und den zweiten Freilauf 2 und das Lager 7 schneidet.

Die Antriebsanordnung 10 bietet dadurch den Vorteil einer besonders einfachen und kompakten Konstruktion und Geometrie. Im Detail erlaubt die spezielle axial überlappende Anordnung der Freiläufe 1,2 und des Lagers 7 eine besonders geringe Abmessung der gesamten Antriebsanordnung 10 in axialer Richtung. Dadurch kann eine besonders schmal bauende Antriebsanordnung 10 bereitgestellt werden, wodurch die Kurbeln 104 axial nahe beieinander platziert werden können. Dadurch können eine optimale Ergonomie und ein hoher Fahrkomfort für den Fahrer des Elektrofahrrads 100 bereitgestellt werden.

Figur 4 zeigt eine Detail-Schnittansicht einer Antriebsanordnung 10 gemäß einem zweiten Ausführungsbeispiel der Erfindung. Das zweite Ausführungsbeispiel entspricht im Wesentlichen dem ersten Ausführungsbeispiel der Figuren 1 bis 3, mit dem Unterschied einer alternativen Anordnung der beiden Freiläufe 1, 2.

Im zweiten Ausführungsbeispiel ist die Anordnung der beiden Freiläufe 1, 2 bezüglich der radialen Richtung vertauscht. Im Detail ist der erste Freilauf 1 radial innerhalb des zweiten Freilaufs 2 angeordnet. Diese Anordnung wird durch alternative Geometrien von Abtriebselement 3, Ausgangswelle 4 und Freilaufträger 6 ermöglicht. Im Detail sind diese Elemente derart ausgebildet, dass der zweite Freilauf 2 radial unmittelbar zwischen einem Teilbereich des Freilaufträgers 6 und einem Teilbereich der Ausgangswelle 4 angeordnet ist. Zudem ist der erste Freilauf 1 radial unmittelbar innerhalb eines Teilbereichs des Abtriebselements 3 und radial unmittelbar außerhalb der Ausgangswelle 4 angeordnet.

Durch die alternative Anordnung der Freiläufe 1, 2 gemäß dem zweiten Ausführungsbeispiel bietet sich der Vorteil, dass der als Fahrerfreilauf ausgebildete zweite Freilauf 2 einen größeren Durchmesser aufweist. Dadurch kann mittels des zweiten Freilaufs 2 ein höheres Tretmoment übertragen werden. Da beispielsweise das Tretmoment häufig größer sein kann als das vom Motor 20 bereitstellbare Motormoment, kann hierdurch auf einfache und kostengünstige Weise eine besonders robuste Konstruktion der Antriebsanordnung 10 bereitgestellt werden.

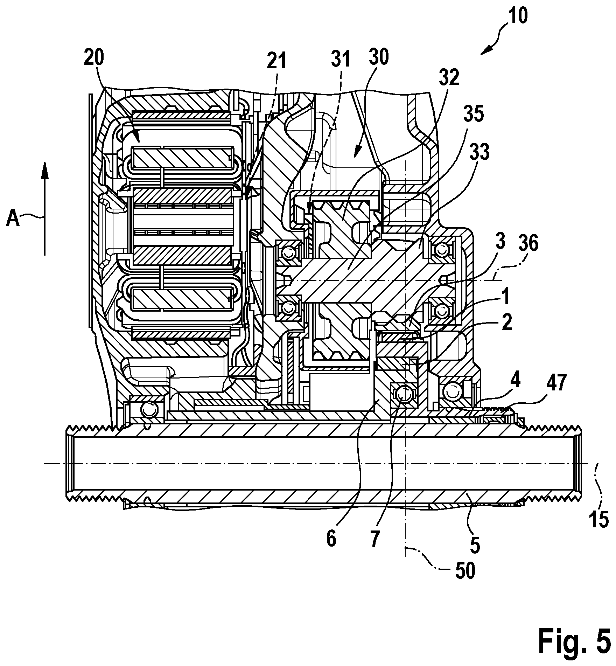

Figur 5 zeigt eine Detail-Schnittansicht einer Antriebsanordnung 10 gemäß einem dritten Ausführungsbeispiel der Erfindung. Das dritte Ausführungsbeispiel entspricht im Wesentlichen dem ersten Ausführungsbeispiel der Figuren 1 bis 3, mit einer alternativen Anordnung von Motor 20 und Getriebe 30.

Im dritten Ausführungsbeispiel der Figur 5 ist der Motor 20 achsparallel zur Kurbelwelle 5 und neben der Kurbelwelle 5 angeordnet. Beispielsweise kann der Motor 20 bezüglich der Fahrtrichtung A (vgl. Figur 1 und 5) vor der Kurbelwelle 5 angeordnet sein. Im Detail ist dabei die (in Figur 5 nicht sichtbare und hinter der Schnittebene durch andere Elemente verdeckt angeordnete) Motorwelle 21 in einem vorbestimmten Abstand von der Kurbelachse 15 angeordnet. Dementsprechend ist zudem die Motorverzahnung 31 (in Figur 5 ebenfalls verdeckt und nicht sichtbar) parallel zur Kurbelachse 15 und in einem Abstand von dieser angeordnet. Die weitere Ausgestaltung und Funktion des Getriebes 30 und der Freiläufe 1, 2 ist im Wesentlichen analog dem ersten Ausführungsbeispiel der Figuren 1 bis 3. Damit kann eine alternative Geometrie und Anordnung der Komponenten der Antriebsanordnung 10 bereitgestellt werden, welche eine in axialer Richtung besonders kompakte Geometrie aufweist.

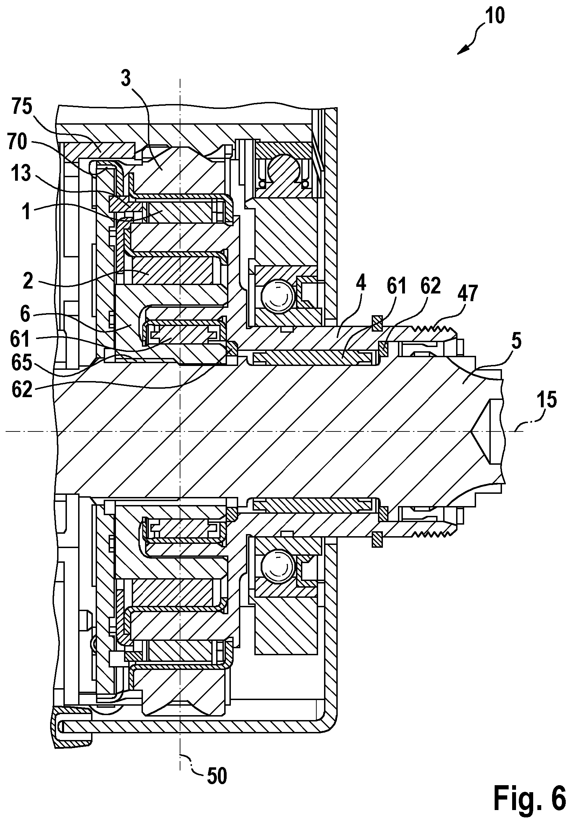

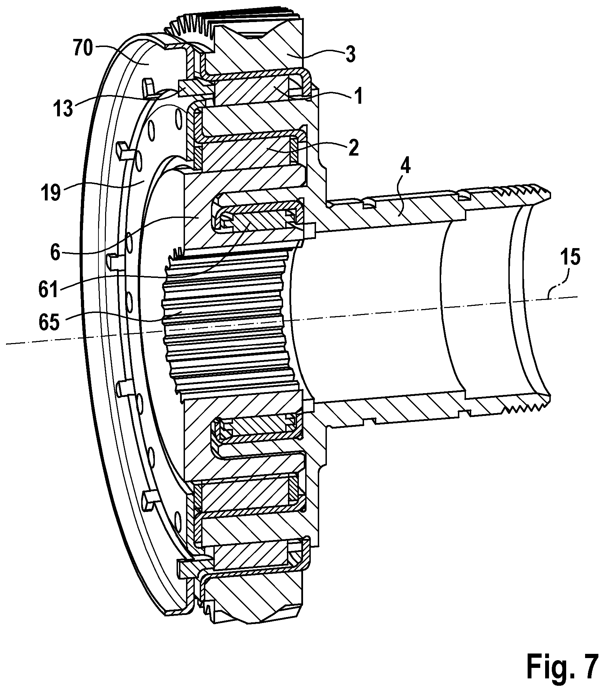

Figur 6 zeigt eine Detail-Schnittansicht einer Antriebsanordnung 10 gemäß einem vierten Ausführungsbeispiel der Erfindung. In Figur 7 ist eine perspektivische Ansicht eines Details der Antriebsanordnung 10 der Figur 6 dargestellt. Das vierte Ausführungsbeispiel entspricht im Wesentlichen dem ersten Ausführungsbeispiel der Figuren 1 bis 3, mit dem Unterschied einer alternativen Lagerung der Ausgangswelle 4. Im vierten Ausführungsbeispiel sind der Freilaufträger 6 und die Ausgangswelle 4 mittels eines Nadellagers 61 relativ zueinander drehbar gelagert.

Insbesondere ist der Freilaufträger 6 dabei im Querschnitt im Wesentlichen U-förmig ausgebildet, wobei das Nadellager 61 und ein Lagerbereich der Ausgangswelle 4 im Inneren der teilweise umschlossenen Öffnung des Freilaufträgers 6 angeordnet sind. Dadurch kann eine besonders kompakte Konstruktion der Antriebsanordnung 10, welche zudem eine optimale Kraftübertragung der Komponenten erlaubt, bereitgestellt werden.

Ferner umfasst die Antriebsanordnung 10 des vierten Ausführungsbeispiels ein weiteres Nadellager 61 zwischen der Kurbelwelle 5 und der Ausgangswelle 4, und ferner Axiallagerelemente 62. Die Axiallagerelemente 62 sind dabei als Anlaufscheiben ausgebildet und können axiale Kräfte aufnehmen. Ein erstes Axiallagerelement 62 ist dabei zwischen Freilaufkäfig 6 und Ausgangswelle 4 angeordnet, und ein zweites Axiallagerelement 62 ist zwischen Kurbelwelle 5 und Ausgangswelle 4 angeordnet.

Im vierten Ausführungsbeispiel ist ferner eine Steckverzahnung 65 zwischen Kurbelwelle 5 und Freilaufträger 6 vorgesehen, welche Kurbelwelle 5 und Freilaufträger 6 drehfest miteinander verbindet. Die Steckverzahnung 65 erlaubt dabei ein gewisses radiales Spiel, das heißt insbesondere eine geringfügige radiale Bewegung von Kurbelwelle 5 und Freilaufträger 6 zueinander.

Figur 7 zeigt ferner eine Detailansicht der Antriebsanordnung 10 im Bereich der Freiläufe 1, 2. Der erste Freilauf 1 weist dabei ein Sicherungselement 19 auf, welches eingerichtet ist zur axialen Sicherung des ersten Freilaufs 1.

Das mit dem Freilaufkäfig 6 drehfest verbundene Reibelement 70 ist im vierten Ausführungsbeispiel als gewinkeltes Blech ausgebildet, gegen welches in radialer Richtung mehrere um den Umfange verteilte Federelemente, die ortsfest am unbeweglichen Gehäuseteil 75 angeordnet sind, drücken können, um eine radiale Reibkraft zu erzeugen (vgl. Figur 6).

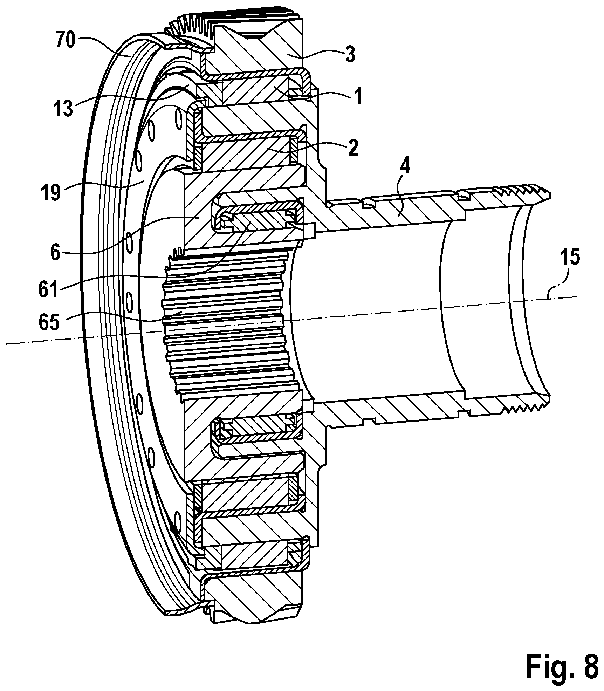

Figur 8 zeigt eine perspektivische Ansicht eines Details einer Antriebsanordnung 10 gemäß einem fünften Ausführungsbeispiel der Erfindung. Das fünfte Ausführungsbeispiel entspricht im Wesentlichen dem vierten Ausführungsbeispiel der Figur 7, mit dem Unterschied einer alternativen Anordnung des Reibelements 70. Im fünften Ausführungsbeispiel ist das Reibelement 70 unmittelbar drehfest mit dem Abtriebselement 3 verbunden. Beispielsweise kann das Reibelement 70 dabei als im Wesentlichen hülsenförmiges Blech ausgebildet sein. Analog dem vierten Ausführungsbeispiel drücken gegen das Reibelement 70 dabei in radialer Richtung Federelement, die am unbeweglichen Gehäuseteil angeordnet sind.

## Patentansprüche

1. Antriebsanordnung eines Elektrofahrrads (100), umfassend:
- ein Abtriebselement (3), welches insbesondere eingerichtet ist zur Übertragung eines Motormoments,
- eine Ausgangswelle (4),
- einen ersten Freilauf (1), und
- einen zweiten Freilauf (2),
- wobei der erste Freilauf (1) und der zweite Freilauf (2) an der Ausgangswelle (4) angeordnet sind, und
- wobei der erste Freilauf (1) und der zweite Freilauf (2) koaxial und in axialer Richtung zumindest teilweise überlappend angeordnet sind.

2. Antriebsanordnung Anspruch 1, wobei der zweite Freilauf (2) ein Klemmrollenfreilauf ist.

3. Antriebsanordnung nach einem der vorhergehenden Ansprüche, wobei der erste Freilauf (1) ein bidirektionaler Freilauf ist.

4. Antriebsanordnung nach Anspruch 3, wobei der erste Freilauf (1) derart ausgebildet, um, insbesondere in Freilaufrichtung, eine Lagerung bereitstellen.

5. Antriebsanordnung nach einem der vorhergehenden Ansprüche, wobei der erste Freilauf (1) zwischen dem Abtriebselement (3) und der Ausgangswelle (4) angeordnet ist, und wobei der erste Freilauf (1) als Motorfreilauf ausgebildet ist, insbesondere um in Sperrrichtung eine Drehmomentübertragung vom Abtriebselement (3) in Richtung der Ausgangswelle (4) zu erlauben.

6. Antriebsanordnung nach einem der vorhergehenden Ansprüche, ferner umfassend eine Kurbelwelle (5), wobei der zweite Freilauf (2) zwischen Kurbelwelle (5) und Ausgangswelle (4) angeordnet ist, und wobei der zweite Freilauf (2) als Fahrerfreilauf ausgebildet ist, insbesondere um in Sperrrichtung eine Drehmomentübertragung von der Kurbelwelle (5) in Richtung der Ausgangswelle (4) zu erlauben.

7. Antriebsanordnung nach Anspruch 6, ferner umfassend einen Freilaufträger (6), welcher mit der Kurbelwelle (5) drehfest verbunden ist.

8. Antriebsanordnung nach Anspruch 7, wobei der zweite Freilauf (2), insbesondere unmittelbar, zwischen dem Freilaufträger (6) und der Ausgangswelle (4) angeordnet ist.

9. Antriebsanordnung nach einem der Ansprüche 7 oder 8, wobei der Freilaufträger (6) und die Ausgangswelle (4) mittels eines Lagers (61) relativ zueinander drehbar gelagert sind, insbesondere wobei das Lager (61) ein Nadellager ist.

10. Antriebsanordnung nach Anspruch 9, ferner umfassend ein Axiallagerelement (62) welches in axialer Richtung zwischen dem Freilaufträger (6) und der Ausgangswelle (4) angeordnet ist.

11. Antriebsanordnung nach einem der Ansprüche 7 bis 10, wobei der Freilaufträger (6) mittels einer Steckverzahnung (65) mit der Kurbelwelle (5) verbunden ist.

12. Antriebsanordnung nach einem der vorhergehenden Ansprüche, wobei der erste Freilauf (1) radial innerhalb des zweiten Freilaufs (2) angeordnet ist.

13. Antriebsanordnung nach einem der Ansprüche 1 bis 11, wobei der zweite Freilauf (2) radial innerhalb des ersten Freilaufs (1) angeordnet ist.

14. Antriebsanordnung nach einem der vorhergehenden Ansprüche, ferner umfassend ein Lager (7), welches mit dem ersten Freilauf (1) und dem zweiten Freilauf (2) koaxial und in axialer Richtung zumindest teilweise überlappend angeordnet ist.

15. Antriebsanordnung nach einem der vorhergehenden Ansprüche, ferner umfassend:
- einen Motor (20), und
- ein Getriebe (30),
- wobei das Getriebe (30) zwischen Motor (20) und den Freiläufen (1, 2) angeordnet ist,
- insbesondere wobei das Abtriebselement (3) Teil des Getriebes (30) ist.

16. Antriebsanordnung nach Anspruch 15, wobei der Motor (20) eine Motorwelle (21) aufweist, an der das Motormoment bereitstellbar ist, und wobei die Motorwelle (21) koaxial zur Ausgangswelle (4) angeordnet ist.

17. Antriebsanordnung nach Anspruch 16, wobei der Motor (20) eine Motorwelle (21) aufweist, an der das Motormoment bereitstellbar ist, und wobei die Motorwelle (21) parallel zur Ausgangswelle (4) und in einem vorbestimmten Abstand zur Ausgangswelle (4) angeordnet ist.

18. Elektrofahrrad, umfassend eine Antriebsanordnung (10) nach einem der vorhergehenden Ansprüche.
